# FASCICULE DE BREVET EUROPEEN

(11) **EP 2 842 868 B1**
(45) Date de publication et mention de la délivrance du brevet: **26.04.2017**
(21) Numéro de dépôt: 14002860.6
(22) Date de dépôt: 18.08.2014
(51) Int. Cl.: B64C 11/28, B64C 27/50

(54) **Dispositif de repliage de pale, pale et aéronef**
Vorrichtung zum Einklappen einer Schaufel, Schaufel und Luftfahrzeug
Blade folding device, blade and aircraft

(30) Priorité: 28.08.2013 FR 1301992
(43) Date de publication de la demande: 04.03.2015
(73) Titulaire: Airbus Helicopters, 13725 Marignane Cedex (FR)
(72) Inventeur: Gaffiero, Jacques, F-75017 Paris (FR); Amari, André, F-60520 LA Chapelle EN Serval (FR)
(74) Mandataire: GPI & Associés

(56) Documents cités:
- EP-A1- 2 540 620
- FR-A1- 2 742 726
- FR-A1- 2 918 347
- US-A- 4 738 592

## Description

La présente invention concerne un dispositif de repliage de pale, une pale munie de ce dispositif et un aéronef.

Un aéronef peut comporter un rotor pourvu d'une pluralité de pales. Par exemple, un giravion comporte au moins un rotor de sustentation. Un tel rotor peut être relativement encombrant lorsque l'aéronef est posé au sol ou sur un navire.

Par suite, une pale peut comprendre un dispositif de repliage pour la positionner dans une position minimisant l'encombrement de l'aéronef. Par exemple, les pales d'un rotor de sustentation d'un giravion peuvent être repliées pour être sensiblement parallèles à un plan de symétrie antéropostérieur de l'aéronef.

Une pale peut comprendre un élément sustentateur et un manchon. L'élément sustentateur est fixé au manchon, ce manchon étant fixé par des moyens d'articulation et de retenue à un moyeu d'un rotor.

Selon une réalisation, l'élément sustentateur comprend deux douilles agencées verticalement. Les douilles présentent donc un axe de symétrie vertical qui s'étend selon l'épaisseur de l'élément sustentateur, en étant sensiblement perpendiculaire à l'extrados et à l'intrados de cet élément sustentateur.

Chaque douille traverse alors un longeron de l'élément sustentateur selon un axe vertical. Par exemple, le longeron comporte des rubans enroulés autour de chaque douille. Les rubans peuvent être réalisés en matériaux composites par exemple

De plus, le manchon comprend une chape pourvue de deux joues horizontales qui sont disposées en élévation de part et d'autre de l'élément sustentateur. Chaque joue est alors munie d'un orifice par douille de l'élément sustentateur, pour pouvoir être traversée par des broches de liaison.

Par suite, l'élément sustentateur est fixé au manchon par deux broches de liaison, chaque broche de liaison traversant la chape du manchon et une douille de l'élément sustentateur.

Pour replier la pale, un opérateur peut alors enlever une broche de liaison, afin de faire pivoter l'élément sustentateur par rapport au manchon autour de l'axe de rotation passant par la broche de liaison restant en position.

Cette architecture est intéressante et efficace. Toutefois, on comprend que le manchon présente une épaisseur non négligeable afin que la chape soit disposée en élévation de part et d'autre de l'élément sustentateur. L'assemblage en résultant présente ainsi une traînée aérodynamique susceptible de dégrader les performances du rotor équipé de cette pale.

En effet, l'agencement d'une chape autour d'un élément sustentateur conduit à l'obtention d'une surface frontale d'une hauteur importante dans un plan perpendiculaire à un plan de rotation d'un rotor. Par suite, cette surface frontale tend à générer une traînée aérodynamique importante engendrant une perte de puissance du rotor ou un accroissement de la consommation de carburant de la part de l'installation motrice entraînant en rotation le rotor afin de ne pas observer une dégradation des performances de ce rotor.

Le document FR 2742726 décrit un manchon articulé pour lier un élément sustentateur à un moyeu. Ainsi, le manchon comprend une ferrure de repliage montée pivotante sur un organe de liaison. La ferrure de repliage est alors fixée par deux broches à l'élément sustentateur, l'organe de liaison étant fixé à un moyeu par des moyens d'articulation et de retenue.

Le document FR 2754779 décrit un procédé de repliage par rotation d'un élément sustentateur autour d'une broche de liaison à un manchon.

Le document US 3923422 présente un élément sustentateur muni d'un longeron comprenant des rubans disposés à plat. Ces rubans sont toutefois vrillés à l'emplanture de l'élément sustentateur pour être entourés autour de deux douilles verticales. Un tel vrillage de l'ordre de quatre-vingt-dix degrés présente l'inconvénient d'être éventuellement destructif, dans la mesure où un longeron est principalement constitué de fibres unidirectionnelles dans le cas de pales en matériaux composites.

Le document FR 2918347 décrit un élément sustentateur muni d'un longeron réparti sur un bord d'attaque ainsi qu'un extrados et un intrados de la pale. Une ferrure de fixation est attachée au pied de l'élément sustentateur.

Cette ferrure de fixation possède un arbre horizontal perpendiculaire à l'envergure de l'élément sustentateur et à un axe de rotation d'un rotor, des rubans du longeron étant partiellement enroulés autour de cet arbre horizontal. De plus, la ferrure de fixation est munie d'orifices verticaux traversant verticalement l'arbre horizontal entre deux rubans du longeron.

On connait aussi les documents EP 2540620 et US 4738592.

La présente invention a alors pour objet de proposer un dispositif de repliage d'une pale générant une traînée aérodynamique optimisée.

Selon l'invention, un dispositif de repliage d'une pale comprend une ferrure apte à être solidarisée à un longeron d'un élément sustentateur s'étendant selon une direction radiale, le dispositif ayant un manchon relié à cette ferrure et apte à être fixé à un moyeu.

Le dispositif de repliage est notamment remarquable en ce que :
- la ferrure comporte au moins un axe de brochage horizontal perpendiculaire à la direction radiale de la ferrure et de l'élément sustentateur, et au moins un orifice de brochage vertical décalé axialement par rapport à l'axe de brochage horizontal de la ferrure selon la direction radiale,
- le manchon comprend au moins un axe de brochage horizontal et un orifice de brochage vertical,
- le dispositif de repliage ayant une broche verticale traversant l'orifice de brochage vertical de la ferrure et l'orifice de brochage vertical du manchon,
- ledit dispositif de repliage comporte au moins un bras latéral reliant chaque axe de brochage horizontal de la ferrure à un axe de brochage horizontal du manchon de manière amovible pour permettre une rotation de la ferrure par rapport au manchon autour de la broche vertical.

On qualifie par « horizontal » un organe s'étendant sensiblement parallèlement à l'axe de battement de la ferrure en vol et de l'élément sustentateur, et par « vertical » un organe s'étendant en vol sensiblement parallèlement à l'axe de traînée de la ferrure et de l'élément sustentateur.

Par conséquent, la ferrure destinée à être solidarisée à un élément sustentateur présente au moins une direction de brochage horizontale et une direction de brochage verticale. La direction de brochage verticale représente un axe de rotation de la ferrure par rapport au manchon, alors que l'axe de brochage horizontal de la ferrure est attaché au manchon par au moins un bras amovible.

Cette architecture innovante présente de multiples avantages.

Cette combinaison contribue notamment ainsi à réduire la dimension en élévation de la surface frontale de la pale dans une section perpendiculaire au plan de rotation du rotor, et donc la traînée aérodynamique de la pale. On verra par la suite que cette combinaison peut ne pas saillir verticalement de l'élément sustentateur.

Cette combinaison permet aussi le repliage de la pale. En effet, un opérateur peut retirer chaque bras latéral. Dès lors, la ferrure et donc l'élément sustentateur peuvent effectuer une rotation par rapport au manchon autour de la broche verticale.

Par ailleurs, on verra par la suite que l'élément sustentateur peut comprendre un longeron s'entourant autour de l'axe de brochage horizontal de la ferrure et de l'orifice de brochage selon des plans sensiblement horizontaux et verticaux.

Dès lors, la broche verticale remplit trois fonctions : la transmission des efforts subis par l'élément sustentateur de la chape vers le manchon, l'attache de la ferrure au manchon, et la création d'un axe de pivotement.

Par ailleurs, l'axe de brochage horizontal de la ferrure permet l'attache de rubans du longeron ainsi que l'attache de la ferrure au manchon par les bras latéraux. L'axe de brochage horizontal de la ferrure assure notamment la transmission des efforts résultant du mouvement en traînée de l'élément sustentateur vers le manchon.

A cet effet, les bras latéraux sont des pièces élémentaires structurales qui assurent la transmission d'une partie des efforts entre l'élément sustentateur et le manchon. La configuration des bras latéraux en forme de « bielle » permet de les attacher sur les axes de brochage horizontaux de la ferrure et du manchon.

La ferrure comporte donc à la fois des rubans enroulés autour de l'axe de brochage horizontal et de l'orifice de brochage vertical. Ces rubans peuvent être réalisés à partir matériaux composites par exemple. Cet arrangement est suffisant pour assurer les objectifs de repliage de l'élément sustentateur et la reprise des efforts résultant des mouvements en traînée et en battement de cet élément sustentateur.

Enfin, le manchon permet de relier l'élément sustentateur au moyeu par des moyens d'articulation et de retenue usuels. La hauteur du manchon est notablement réduite du fait de cette architecture ce qui permet de diminuer sa traînée aérodynamique, tout en assurant les fonctions de repliage et de démontage de l'élément sustentateur.

Le dispositif de repliage peut comporter une ou plusieurs des caractéristiques qui suivent.

Ainsi, la ferrure et le manchon peuvent définir conjointement une chape et un insert inséré dans ladite chape, la chape et l'insert présentant chacun lesdits orifices de brochage verticaux de la ferrure et du manchon

Ainsi, selon la réalisation la ferrure comporte soit une chape coopérant avec un insert du manchon, soit un insert coopérant avec une chape du manchon. Ainsi, l'insert peut présenter des dimensions réduites permettant de restreindre l'encombrement du dispositif.

Selon un premier mode de réalisation :
- la ferrure comporte une chape s'étendant à partir de l'axe de brochage horizontal de la ferrure selon la direction radiale, la chape comprenant l'orifice de brochage de la ferrure,
- le manchon comprend un insert décalé axialement par rapport à l'axe de brochage horizontal de ce manchon, ledit insert comprenant ledit orifice de brochage du manchon, ledit insert étant agencé dans ladite chape en mettant en coïncidence l'orifice de brochage vertical de la ferrure avec l'orifice de brochage vertical de l'insert,
- la broche verticale traverse la chape de la ferrure et l'insert du manchon.

En effet, le manchon est inséré par le biais de son insert au sein d'une chape de la ferrure d'un élément sustentateur. Le dispositif de repliage va alors à l'encontre des préjugés existants qui consistent au contraire à pourvoir le manchon d'une chape enserrant un élément sustentateur. En allant à l'inverse d'une pratique courante, le dispositif de repliage obtenu présente une traînée aérodynamique qui est minimisée par rapport à l'état de la technique. En effet, on comprend que l'encombrement du dispositif est réduit par rapport à cet état de la technique selon une direction en élévation.

Par ailleurs, la ferrure peut avoir une forme de T, l'axe de brochage horizontal de la ferrure s'étendant transversalement selon une première branche du T et la chape s'étendant suivant une deuxième branche du T orthogonale à la première branche.

Selon un deuxième mode de réalisation :
- le manchon comporte une chape s'étendant à partir de l'axe de brochage horizontal de ce manchon selon la direction radiale, la chape comprenant l'orifice de brochage du manchon,
- la ferrure comporte un insert décalé axialement par rapport à l'axe de brochage horizontal de cette ferrure, l'insert comprenant l'orifice de brochage de la ferrure, l'insert étant agencé dans la chape du manchon en mettant en coïncidence l'orifice de brochage vertical de la ferrure avec l'orifice de brochage vertical de l'insert,
- la broche verticale traverse la chape et l'insert.

L'insert permet d'effiler l'emplanture de l'élément sustentateur afin que la chape du manchon ne saille pas en élévation par rapport à cet élément sustentateur.

Indépendamment de la réalisation, la chape peut comporter une aile supérieure et une aile inférieure, chaque aile et l'insert étant traversés par la broche verticale.

Les ailes supérieure et inférieure peuvent s'étendre dans des plans disposés au dessus et en dessous des axes de brochage horizontaux, les termes « dessus » et « dessous » étant à considérer selon la direction de la pesanteur.

En outre, au moins un axe de brochage horizontal peut comporter d'une part une douille et, d'autre part, une broche qui traverse cette douille et au moins un bras latéral selon une direction de brochage horizontale.

Selon une version, l'axe de brochage horizontal de la ferrure est situé entre la broche verticale et l'axe de brochage horizontal du manchon.

Selon une autre version, l'axe de brochage horizontal de la ferrure et l'axe de brochage horizontal du manchon sont axialement situés de part et d'autre de la broche verticale.

Par ailleurs, le dispositif peut posséder un unique bras latéral comprenant un amortisseur. Par exemple, cet amortisseur peut viser à amortir les mouvements en traînée de l'élément sustentateur.

En outre, la ferrure peut comporter deux axes de brochage horizontaux décalés l'un par rapport à l'autre.

De même, le manchon peut comporter deux axes de brochage horizontaux décalés l'un par rapport à l'autre.

Ces dispositions peuvent tendre à favoriser un sens de rotation pour le repliage d'un élément sustentateur.

Outre un dispositif de repliage, l'invention vise une pale qui est munie d'un élément sustentateur s'étendant en envergure selon une direction radiale.

Cette pale comporte alors un dispositif de repliage du type précédemment décrit, la ferrure étant solidarisée audit élément sustentateur.

L'élément sustentateur comportant un longeron, le longeron peut présenter au moins un ruban horizontal enroulé selon un plan horizontal et entourant l'orifice de brochage vertical de la ferrure pour la transmission des efforts résultant d'un mouvement en battement de l'élément sustentateur, ledit longeron présentant au moins un ruban vertical enroulé selon un plan vertical et entourant un axe de brochage horizontal de la ferrure pour la transmission des efforts résultant d'un mouvement en traînée de l'élément sustentateur.

L'invention vise de plus un aéronef muni d'un rotor comprenant un moyeu et une pluralité de pales. Chaque pale est alors du type décrit précédemment, chaque manchon étant attaché au moyeu par un moyen d'articulation et de retenue.

L'invention et ses avantages apparaîtront avec plus de détails dans le cadre de la description qui suit avec des exemples de réalisations donnés à titre illustratif en référence aux figures annexées qui représentent :
- la figure 1, une vue d'un aéronef comprenant une pale selon l'invention,
- les figures 2 et 3 des vues présentant une ferrure selon un premier mode de réalisation de l'invention,
- la figure 4, une vue d'une extrémité d'un manchon selon un premier mode de réalisation de l'invention,
- la figure 5, une vue d'un dispositif de repliage selon un premier mode de réalisation de l'invention, et
- les figures 6 à 9, des vues d'un dispositif de repliage assemblé selon un deuxième mode de réalisation de l'invention.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite radiale. Les termes « radial » et « envergure » sont relatifs à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

La première direction X et la deuxième direction Y forme un plan XY dit « horizontal » correspondant sensiblement au plan de rotation dans lequel les pales d'un rotor évoluent en rotation.

Les plans orthogonaux à ce plan horizontal XY s'élèvent en élévation et sont dits « verticaux ».

Le terme « horizontal » fait référence à une direction parallèle au plan horizontal, le terme « vertical » faisant référence à une direction perpendiculaire à ce plan horizontal.

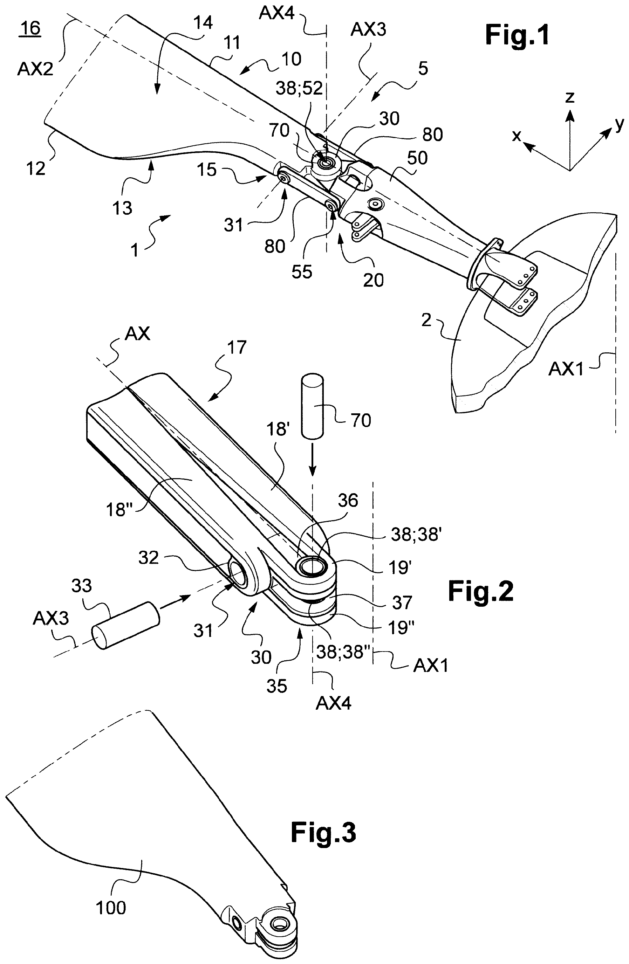

La figure 1 présente un aéronef 1 muni d'un rotor. Ce rotor comprend un moyeu 2 portant une pluralité de pales 5. Pour faciliter la lecture de la figure 1, seule une pale 5 est représentée sur cette figure.

Chaque pale 5 est pourvue d'un élément sustentateur 10. L'élément sustentateur s'étend transversalement d'un bord d'attaque 11 vers un bord de fuite 12, en élévation d'un intrados 13 vers un extrados 14, et envergure le long de la direction radiale AX2 d'une emplanture 15 vers une extrémité libre 16.

La pale 5 comprend de plus un dispositif 20 de repliage et d'attache au moyeu 2.

Ce dispositif 20 est muni d'une ferrure 30 coopérant avec un manchon 50. La ferrure 30 est solidaire de l'élément sustentateur 10, alors que le manchon est attaché au moyeu par un moyen d'articulation et de retenue usuel non représenté.

Ainsi, la ferrure 30 possède au moins un axe de brochage horizontal 31 qui est perpendiculaire à la direction radiale. L'axe de brochage horizontal est donc dirigé selon une direction de brochage AX3 qui est orthogonale à une direction parallèle à l'axe de rotation AX1 du rotor.

De plus, la ferrure 30 est munie d'au moins un orifice de brochage vertical 38 décalé axialement par rapport à l'axe de brochage horizontal 31 de la ferrure selon la direction radiale AX2. L'orifice de brochage 38 est apte à accueillir une broche dirigée selon une direction verticale AX4 parallèle à l'axe de rotation AX1 du rotor.

Dès lors, le manchon 50 comprend aussi au moins un axe de brochage horizontal 55 et un orifice de brochage vertical 52.

Par conséquent, le dispositif 20 de repliage inclut une broche verticale 70 traversant l'orifice de brochage vertical 38 de la ferrure 30 et l'orifice de brochage vertical 52 du manchon 50 pour articuler la ferrure au manchon en autorisant un degré de liberté en rotation autour de la direction verticale AX4.

En outre, le dispositif 20 de repliage comporte au moins un bras latéral 80 reliant de façon réversible chaque axe de brochage horizontal 31 de la ferrure 30 à un axe de brochage horizontal 55 du manchon 50.

Pour limiter la traînée aérodynamique du dispositif 20, la ferrure 30 et le manchon 50 forment conjointement un système comprenant une chape et un insert inséré dans cette chape. La chape et l'insert définissent les orifices de brochage verticaux traversés par la broche verticale 70.

La figure 2 présente la ferrure 30 selon un premier mode de réalisation.

Cette ferrure 30 présente une forme en T vue de dessus en ayant une première branche dirigée selon une direction transversale de l'élément sustentateur correspondant, et une deuxième branche dirigée selon une direction radiale s'étendant selon l'envergure de l'élément sustentateur et donc selon la direction radiale AX2.

Ainsi, la ferrure 30 est munie d'un axe de brochage horizontal 31 dirigé selon une direction transversale, et donc perpendiculaire à la direction radiale AX2. L'axe de brochage horizontal 31 est par exemple pourvu d'un logement horizontal 32 qui est matérialisé par une douille sur la figure 2, ainsi que d'une broche 33 apte à traverser le logement horizontal selon une première direction de brochage horizontale AX3.

De plus, la ferrure 30 possède une chape 35 s'étendant à partir de l'axe de brochage horizontal vers le manchon selon une direction radiale, et donc la direction radiale AX2. La chape et l'axe de brochage sont donc décalés l'un par rapport à l'autre axialement. La chape est par exemple interposée entre le manchon 50 et l'axe de brochage horizontal 31.

Cette chape 35 inclut une aile supérieure 36 et une aile inférieure 37. Chaque aile est contenue dans un plan horizontal encadrant conjointement l'axe de brochage horizontal 31.

En outre, l'aile supérieure 36 et l'aile inférieure 37 présentent chacune au moins un orifice de brochage vertical 38', 38" dirigé le long d'une direction de brochage verticale AX4, perpendiculaire à ces ailes supérieure et inférieure. Une broche verticale 70 peut alors traverser les deux ailes de la chape 35.

La ferrure 30 est solidaire de l'élément sustentateur. Plus précisément, l'élément sustentateur comporte un longeron 17. Par suite, ce longeron 17 est muni d'un ruban supérieur 19' enroulé dans un plan horizontal supérieur autour de l'aile supérieure 36, et d'un ruban inférieur 19" enroulé dans un plan horizontal inférieur autour de l'aile inférieure 37. De plus, le longeron 17 est muni d'un ruban latéral droit 18' et d'un ruban latéral gauche 18" enroulés chacun dans un plan vertical autour de l'axe de brochage horizontal 31, de part et d'autre des rubans supérieur 19' et inférieur 19". Les efforts résultant du mouvement en battement de la pale sont transmis par le longeron 17 à la ferrure via la chape, les efforts résultant du mouvement en traînée de la pale étant transmis par le longeron 17 à la ferrure via l'axe de brochage horizontal.

La figure 3 présente l'élément sustentateur recouvert de son revêtement 100. On note que la ferrure est une partie intégrante de cet élément sustentateur.

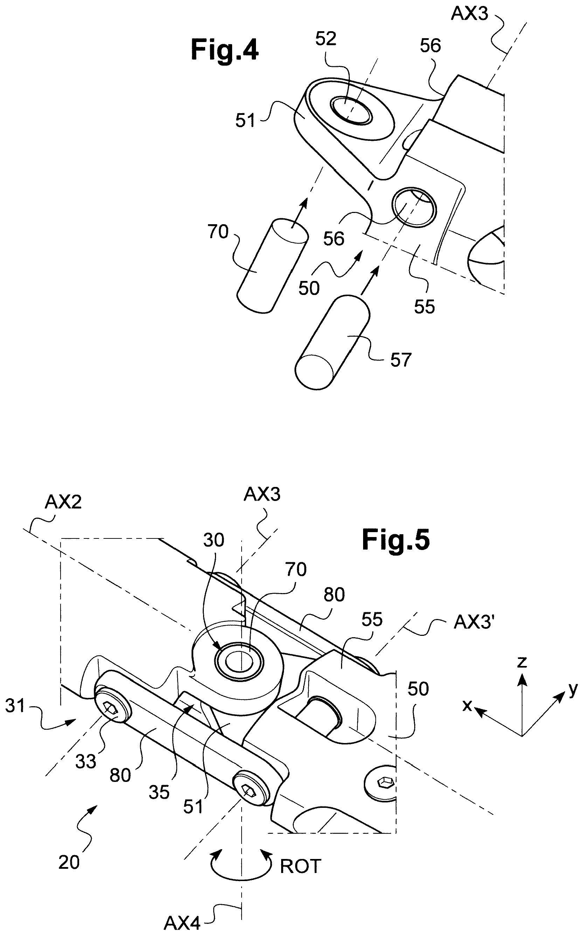

La figure 4 présente l'extrémité d'un manchon 50 qui est apte à être reliée à la ferrure 30.

Ce manchon 50 est pourvu d'un insert 51 pouvant être inséré dans la chape 35 d'une ferrure, entre les ailes supérieure et inférieure de cette chape. Cet insert est muni d'un orifice 52 s'étendant en élévation selon la direction de brochage verticale AX4. L'orifice 52 de l'insert peut alors être mis en coïncidence avec l'orifice des ailes de la chape 35 lorsque l'insert 51 est enfoncé dans la chape 35. Le manchon peut alors être articulé autour de la direction de brochage verticale AX4 à la ferrure 30 par une broche verticale 70 traversant les orifices de brochage verticaux 38 de la chape 35 et l'orifice de brochage vertical 52 de l'insert 51.

De plus, le manchon 50 comprend au moins un axe de brochage 55 horizontal décalé axialement par rapport à l'insert 51 selon la direction radiale AX2, en s'étendant axialement à partir de l'insert 51.

Chaque axe de brochage 55 peut comprendre au moins une lumière horizontale 56 solidaire de l'insert 51, chaque lumière s'étendant transversalement. Selon la réalisation de la figure 4, le manchon peut comprendre deux lumières dans le prolongement l'une de l'autre. Chaque lumière peut être ménagée dans une douille.

De plus, l'axe de brochage inclut au moins une broche 57 qui peut traverser au moins une lumière horizontale 56, et deux lumières en vis-à-vis par exemple.

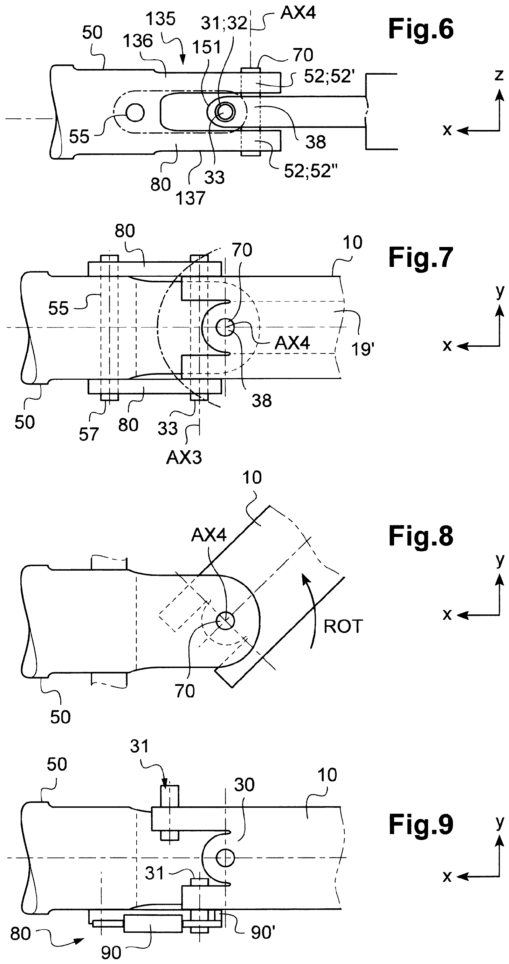

Selon l'exemple de la figure 9, le manchon peut comprendre deux lumières horizontales 56 décalés l'une par rapport à l'autre, chaque lumière pouvant être traversée par sa propre broche. Le manchon possède alors deux axes de brochage horizontaux décalés l'un par rapport à l'autre.

De même, la ferrure peut comporter au moins deux axes de brochage horizontaux, éventuellement décalés l'un par rapport à l'autre.

En référence à la figure 5, le dispositif 20 est aussi pourvu d'au moins un bras latéral 80 pour relier chaque axe de brochage horizontal 31 de la ferrure à au moins un axe de brochage horizontal 55 du manchon.

Ainsi, lorsque l'insert 51 est positionné dans la chape 35, un opérateur met en place la broche verticale 70. La broche verticale 70 traverse alors la chape 35 et l'insert 51 de manière à lier la ferrure au manchon par le biais d'une articulation, la broche verticale matérialisant un axe de brochage vertical AX4 et un axe de rotation de la ferrure par rapport au manchon.

De plus, l'opérateur met en place les bras latéraux. Ainsi, chaque bras latéral est fixé à la ferrure par un arbre horizontal. Par exemple une broche horizontale traverse chaque bras latéral et la ferrure 30. Selon l'exemple représenté, une unique broche traverse selon une direction de brochage horizontale AX3 la ferrure 30 et deux bras latéraux.

En outre, chaque bras latéral est aussi fixé au manchon. Selon l'exemple représenté, une unique broche traverse selon une direction de brochage horizontale AX3' le manchon 50 et les deux bras latéraux.

L'encombrement du dispositif 20 est alors relativement restreint, le dispositif ne possédant pas d'organes saillant en élévation de l'élément sustentateur.

En référence à la figure 9, le dispositif comporte un seul bras latéral 80. Ce bras 80 comprend un amortisseur 90. De plus, le dispositif peut prévoir une butée 90'.

Par ailleurs et en référence à la figure 1, l'axe de fixation peut être situé en dehors de la chape 35 en étant agencé entre l'insert 51 et l'extrémité du manchon fixé au moyeu.

A l'inverse, l'axe de fixation peut traverser la chape 35 de la ferrure, entre les ailes supérieure et inférieure.

Les figures 6 à 9 présentent un deuxième mode de réalisation.

Selon ce deuxième mode de réalisation, la chape du dispositif 20 de repliage est disposée sur le manchon, la ferrure étant alors pourvue d'un insert.

Par suite, le manchon 30 comporte une chape 135 s'étendant à partir d'un axe de brochage horizontal 55 de ce manchon 50 selon la direction radiale AX2. La chape 135 est munie d'une aile supérieure 136 et d'une aile inférieure 137 dans lesquelles sont ménagées des orifices de brochage verticaux 52', 52".

Par suite, la ferrure 30 comporte un insert 151 qui est décalé axialement par rapport à l'axe de brochage horizontal 31 de cette ferrure 30. L'insert 151 comprend alors au moins un orifice de brochage vertical 38. Cet insert 151 est disposé entre les ailes supérieure 136 et inférieure 137, en mettant en coïncidence l'orifice de brochage vertical de la ferrure avec les orifices de brochage verticaux de l'insert. Par suite, une broche verticale 70 traverse la chape 35 et l'insert 51 selon la direction de brochage verticale AX4.

De plus et en référence à la figure 7, deux bras latéraux 80 lient chaque axe de brochage horizontal de la ferrure à un axe de brochage horizontal du manchon.

Indépendamment du mode de réalisation, les figures 7 et 8 explicitent le fonctionnement du repliage de la pale.

En référence à la figure 7, la ferrure et le manchon s'étendent tous deux selon la direction radiale de la ferrure lorsque les bras latéraux sont fixés à la ferrure et au manchon.

Pour replier la pale un opérateur désolidarise les bras latéraux du manchon et/ou de la ferrure.

En référence à la figure 8, l'élément sustentateur et la ferrure peuvent alors effectuer une rotation ROT autour de l'axe de brochage vertical AX4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Dispositif (20) de repliage d'une pale (5) comprenant une ferrure (30) apte à être solidarisée à un longeron (17) d'un élément sustentateur (10) s'étendant en envergure selon une direction radiale (AX2), le dispositif (20) de repliage ayant un manchon (50) relié à ladite ferrure (30) et apte à être fixé à un moyeu (2),
- la ferrure (30) comportant au moins un orifice de brochage vertical (38),
- le manchon (50) comprenant au moins un axe de brochage horizontal (55) et un orifice de brochage vertical (52), et
- ledit dispositif (20) de repliage ayant une broche verticale (70) traversant ledit orifice de brochage vertical (38) de la ferrure (30) et l'orifice de brochage vertical (52) du manchon (50), **caractérisé en ce que**:
- la ferrure (30) comporte au moins un axe de brochage horizontal (31) perpendiculaire à la direction radiale (AX2) de la ferrure (30),
- l'orifice de brochage vertical (38) est décalé axialement par rapport à l'axe de brochage horizontal (31) de la ferrure (30) selon la direction radiale (AX2), et
- ledit dispositif (20) de repliage comporte au moins un bras latéral (80) reliant chaque axe de brochage horizontal (31) de la ferrure (30) à un axe de brochage horizontal (55) du manchon (50) de manière amovible pour permettre une rotation (ROT) de la ferrure (30) par rapport au manchon (50) autour de la broche verticale (70).

2. Dispositif selon la revendication 1,
**caractérisé en ce que** la ferrure (30) et le manchon (50) définissent conjointement une chape (35, 135) et un insert (51, 151) inséré dans ladite chape (35, 135), la chape (35, 135) et l'insert (51, 151) présentant chacun lesdits orifices de brochage verticaux (38, 52) de la ferrure (30) et du manchon (50).

3. Dispositif selon la revendication 1,
**caractérisé en ce que** :
- la ferrure (30) comporte ladite chape (35) qui s'étend à partir de l'axe de brochage horizontal (31) de la ferrure (30) selon la direction radiale (AX2), ladite chape (35) comprenant ledit orifice de brochage (38) de la ferrure (30),
- le manchon (50) comprend un insert (51) décalé axialement par rapport à l'axe de brochage horizontal (55) de ce manchon (50), ledit insert (51) comprenant ledit orifice de brochage vertical (52) du manchon (50), ledit insert (51) étant agencé dans ladite chape (35) en mettant en coïncidence l'orifice de brochage vertical (38) de la ferrure avec l'orifice de brochage vertical (52) de l'insert,
- ladite broche verticale (70) traverse ladite chape (35) et ledit insert (51).

4. Dispositif selon la revendication 1,
**caractérisé en ce que** :
- le manchon (30) comporte ladite chape (135) s'étendant à partir de l'axe de brochage horizontal (55) de ce manchon (50) selon la direction radiale (AX2), ladite chape (135) comprenant ledit orifice de brochage vertical (52) du manchon,
- la ferrure (30) comporte un insert (151) décalé axialement par rapport à l'axe de brochage horizontal (31) de cette ferrure (30), ledit insert (151) comprenant ledit orifice de brochage vertical (38) de la ferrure, ledit insert étant agencé dans ladite chape du manchon en mettant en coïncidence l'orifice de brochage vertical de la ferrure avec l'orifice de brochage vertical de l'insert,
- ladite broche verticale (70) traverse ladite chape (35) et ledit insert (51).

5. Dispositif selon l'une quelconque des revendications 2 à 4,
**caractérisé en ce que** ladite chape (35, 135) comporte une aile supérieure (36,136) et une aile inférieure (37, 137), chaque aile (36, 37, 136, 137) et ledit insert (51, 151) étant traversés par ladite broche verticale (70).

6. Dispositif selon l'une quelconque des revendications 1 à 5,
**caractérisé en ce que** au moins un axe de brochage horizontal (31) comporte au moins une douille (32) et une broche (33) qui traverse ladite douille (32) et au moins un bras latéral (80) selon une direction de brochage horizontale (AX3).

7. Dispositif selon la revendication 3,
**caractérisé en ce que** ladite ferrure (30) à une forme de T, l'axe de brochage horizontal (31) de la ferrure s'étendant transversalement selon une première branche du T alors que la chape (35) s'étendant suivant une deuxième branche du T orthogonale à la première branche.

8. Dispositif selon l'une quelconque des revendications 1 à 7,
**caractérisé en ce que** l'axe de brochage horizontal (31) de la ferrure (30) est situé entre la broche verticale (70) et l'axe de brochage horizontal (55) du manchon (50).

9. Dispositif selon l'une quelconque des revendications 1 à 7,
**caractérisé en ce que** l'axe de brochage horizontal (31) de la ferrure (30) et l'axe de brochage horizontal (55) du manchon (50) sont axialement situés de part et d'autre de la broche verticale (70)

10. Dispositif selon l'une quelconque des revendications 1 à 9,
**caractérisé en ce que** ledit dispositif comporte uniquement un bras latéral (80) qui comporte un amortisseur (90).

11. Dispositif selon l'une quelconque des revendications 1 à 10,
**caractérisé en ce que** ladite ferrure (30) comporte deux axes de brochage horizontaux (31) décalés l'un par rapport à l'autre.

12. Dispositif selon l'une quelconque des revendications 1 à 11
**caractérisé en ce que** ledit manchon (50) comporte deux axes de brochage horizontaux décalés l'un par rapport à l'autre.

13. Pale (5) munie d'un élément sustentateur (10) s'étendant en envergure selon une direction radiale (AX2),
**caractérisée en ce que** ladite pale (5) comporte un dispositif (20) de repliage selon l'une quelconque des revendications 1 à 12, ladite ferrure (30) étant solidarisée audit élément sustentateur (10).

14. Pale selon la revendication 13,
**caractérisée en ce que** ledit élément sustentateur (10) comporte un longeron (17), ledit longeron (17) présentant au moins un ruban horizontal (19', 19") enroulé selon un plan horizontal et entourant l'orifice de brochage vertical (38) de la ferrure (30) pour la transmission des efforts résultant d'un mouvement en battement de l'élément sustentateur, ledit longeron (17) présentant au moins un ruban vertical (18', 18") enroulé selon un plan vertical et entourant un axe de brochage horizontal (31) de la ferrure (30) pour la transmission des efforts résultant d'un mouvement en traînée de l'élément sustentateur.

15. Aéronef (1) muni d'un rotor comprenant un moyeu et une pluralité de pales (5),
**caractérisé en ce que** chaque pale (5) est selon l'une quelconque des revendications 13 à 14, chaque manchon (50) étant attaché audit moyeu par un moyen d'articulation et de retenue.

## Patentansprüche

1. Vorrichtung (20) zum Einklappen eines Rotorblatts (5) mit einem Beschlag (30), der an einem Längsträger (17) eines Drahtelements (10) befestigt werden kann, das sich in einer Radialrichtung (AX2) erstreckt, wobei die Einklappvorrichtung (20) eine Muffe (50) aufweist, die an dem Beschlag (30) befestigt ist und an einer Nabe (2) befestigt werden kann,
- wobei der Beschlag (30) mindestens eine vertikale Bohrung (38) aufweist,
- wobei die Muffe (50) mindestens eine horizontale Bohrung (55) und eine vertikale Bohrung (52) aufweist, und
- wobei die Einklappvorrichtung (20) einen vertikalen Zapfen (70) aufweist, der die vertikale Bohrung (38) des Beschlags (30) und die vertikale Bohrung (52) der Muffe (50) durchquert,
**dadurch gekennzeichnet, dass**:
- der Beschlag (30) mindestens eine horizontale Bohrungsachse (31) aufweist, die senkrecht zu der Radialrichtung (AX2) des Beschlags (30) verläuft,
- die vertikale Bohrung (38) axial relativ zur horizontalen Bohrungsachse (31) des Beschlags (30) in der Radialrichtung (AX2) versetzt ist, und
- die Einklappvorrichtung (20) mindestens einen seitlichen Arm (80) aufweist, der jede horizontale Bohrungsachse (31) des Beschlags (30) mit einer horizontalen Bohrungsachse (55) der Muffe (50) lösbar verbindet, um eine Drehung (ROT) des Beschlags (30) relativ zu der Muffe (50) um den vertikalen Zapfen (70) zu erlauben.

2. Vorrichtung nach Anspruch 1,
**dadurch gekennzeichnet, dass** der Beschlag (30) und die Muffe (50) zusammen eine Abdeckung (35, 135) und einen Einsatz (51, 151), der in die Abdeckung (35, 135) eingesetzt ist, definieren, wobei die Abdeckung (35, 135) und der Einsatz (51, 151) jeweils die vertikalen Bohrungen (38, 52) des Beschlags (30) und der Muffe (50) aufweisen.

3. Vorrichtung nach Anspruch 1,
**dadurch gekennzeichnet, dass**:
- der Beschlag (30) die Abdeckung (35) aufweist, die sich ausgehend von der horizontalen Bohrungsachse (31) des Beschlags (30) in der Radialrichtung (AX2) erstreckt, wobei die Abdeckung (35) die Bohrung (38) des Beschlags (30) aufweist,
- die Muffe (50) einen Einsatz (51) aufweist, der axial relativ zu einer horizontalen Bohrungsachse (55) der Muffe (50) versetzt ist, wobei der Einsatz (51) die vertikale Bohrung (52) der Muffe (50) aufweist, wobei der Einsatz (51) in der Abdeckung (35) so angeordnet ist, dass sich die vertikale Bohrung (38) des Beschlags mit der vertikalen Bohrung (52) des Einsatzes überschneidet,
- der vertikale Zapfen (70) die Abdeckung (35) und den Einsatz (51) durchquert.

4. Vorrichtung nach Anspruch 1,
**dadurch gekennzeichnet, dass**:
- die Muffe (30) die Abdeckung (135) aufweist, die sich ausgehend von der horizontalen Bohrungsachse (55) dieser Muffe (50) entlang der Radialrichtung (AX2) erstreckt, wobei die Abdeckung (135) die vertikale Bohrung (52) der Muffe aufweist,
- der Beschlag (30) einen Einsatz (151) aufweist, der axial relativ zu der horizontalen Bohrungsachse (31) dieses Beschlags (30) versetzt ist, wobei der Einsatz (151) die vertikale Bohrung (38) des Beschlags aufweist, wobei der Einsatz in der Abdeckung der Muffe so angeordnet ist, dass die vertikale Bohrung des Beschlags sich mit der vertikalen Bohrung des Einsatzes überschneidet,
- der vertikale Zapfen (70) die Abdeckung (35) und den Einsatz (51) durchquert.

5. Vorrichtung nach einem der Ansprüche 2 bis 4,
**dadurch gekennzeichnet, dass** die Abdeckung (35, 135) einen oberen Flügel (36, 136) und einen unteren Flügel (37, 137) aufweist, wobei jeder Flügel (36, 37, 136, 137) und der Einsatz (51, 151) von dem vertikalen Zapfen (70) durchquert werden.

6. Vorrichtung nach einem der Ansprüche 1 bis 5,
**dadurch gekennzeichnet, dass** mindestens eine horizontale Bohrungsachse (31) mindestens eine Buchse (32) und einen Zapfen (33) aufweist, der die Buchse (32) und mindestens einen Seitenarm (80) in einer horizontalen Bohrungsrichtung (AX3) durchquert.

7. Vorrichtung nach Anspruch 3,
**dadurch gekennzeichnet, dass** der Beschlag (30) die Form eines T's aufweist, wobei sich die horizontale Bohrungsachse (31) des Beschlags quer entlang eines ersten Arms des T's erstreckt, während die Abdeckung (35) sich entlang eines zweiten Arms des T's senkrecht zu dem ersten Arm erstreckt.

8. Vorrichtung nach einem der Ansprüche 1 bis 7,
**dadurch gekennzeichnet, dass** die Achse der horizontalen Bohrung (31) des Beschlags (30) zwischen dem vertikalen Zapfen (70) und der Achse der horizontalen Bohrung (55) der Muffe (50) gelegen ist.

9. Vorrichtung nach einem der Ansprüche 1 bis 7,
**dadurch gekennzeichnet, dass** die Achse der horizontalen Bohrung (31) des Beschlags (30) und die Achse der horizontalen Bohrung (55) der Muffe (50) axial auf der einen und der anderen Seite des vertikalen Zapfens (70) gelegen sind.

10. Vorrichtung nach einem der Ansprüche 1 bis 9,
**dadurch gekennzeichnet, dass** die Vorrichtung nur einen Seitenarm (80) aufweist, der einen Dämpfer (90) aufweist.

11. Vorrichtung nach einem der Ansprüche 1 bis 10,
**dadurch gekennzeichnet, dass** der Beschlag (30) zwei horizontale Bohrungsachsen (31) aufweist, die zueinander versetzt sind.

12. Vorrichtung nach einem der Ansprüche 1 bis 11,
**dadurch gekennzeichnet, dass** die Muffe (50) zwei horizontale Bohrungsachsen aufweist, die zueinander versetzt sind.

13. Rotorblatt (5) mit einem Tragelement (10), das sich entlang einer radialen Richtung (AX2) erstreckt,
**dadurch gekennzeichnet, dass** das Rotorblatt (5) eine Vorrichtung (20) zum Einklappen gemäß einem der Ansprüche 1 bis 12 aufweist, wobei der Beschlag (30) mit dem Tragelement (10) fest verbunden ist.

14. Rotorblatt nach Anspruch 13,
**dadurch gekennzeichnet, dass** das Tragelement (10) einen Längsträger (17) aufweist, wobei der Längsträger (17) mindestens ein horizontales Band (19', 19") aufweist, das in einer horizontalen Ebene aufgerollt ist und die vertikale Bohrung (38) des Beschlags (30) zur Übertragung von Kräften umgibt, die sich aus einer Schlagbewegung des Tragelements ergeben, wobei der Längsträger (17) mindestens ein vertikales Band (18', 18") aufweist, das in einer vertikalen Ebene aufgerollt ist und eine horizontale Bohrungsachse (31) des Beschlags (30) umgibt, um Kräfte zu übertragen, die aus einer Lead/Lag-Bewegung des Tragelements herrühren.

15. Luftfahrzeug (1) mit einem Rotor, der eine Nabe und eine Mehrzahl von Rotorblättern (5) aufweist,
**dadurch gekennzeichnet, dass** jedes Rotorblatt (5) gemäß einem der Ansprüche 13 bis 14 ausgebildet ist, wobei jede Muffe (50) an der Nabe über ein Gelenk- und Halterungsmittel befestigt ist.

## Claims

1. Device (20) for folding a blade (5), comprising a fitting (30) able to be secured to a spar (17) of an aerofoil (10) extending spanwise in a radial direction (AX2), the folding device (20) having a cuff (50) connected to said fitting (30) and able to be fastened to a hub (2),
- the fitting (30) comprising at least one vertical pin orifice (38),
- the cuff (50) comprising at least one horizontal pin axis (55) and one vertical pin orifice (52), and
- said folding device (20) having a vertical pin (70) passing through said vertical pin orifice (38) of the fitting (30) and the vertical pin orifice (52) of the cuff (50),
**characterized in that**
- the fitting (30) comprises at least one horizontal pin axis (31) perpendicular to the radial direction (AX2) of the fitting (30),
- the vertical pin orifice (38) is offset axially from the horizontal pin axis (31) of the fitting (30) in the radial direction (AX2), and
- said folding device (20) comprises at least one lateral arm (80) connecting each horizontal pin axis (31) of the fitting (30) to a horizontal pin axis (55) of the cuff (50) in a removable manner so as to enable a rotation (ROT) of the fitting (30) relative to the cuff (50) about the vertical pin (70).

2. Device according to claim 1, **characterized in that** the fitting (30) and the cuff (50) together define a clevis (35, 135) and an insert (51, 151) inserted in said clevis (35, 135), the clevis (35, 135) and the insert (51, 151) each having said vertical pin orifices (38, 52) of the fitting (30) and of the cuff (50).

3. Device according to claim 1, **characterized in that**:
- the fitting (30) comprises said clevis (35) which extends from the horizontal pin axis (31) of the fitting (30) in the radial direction (AX2), said clevis (35) comprising said pin orifice (38) of the fitting (30),
- the cuff (50) comprises an insert (51) offset axially from the horizontal pin axis (55) of said cuff (50), said insert (51) comprising said vertical pin orifice (52) of the cuff (50), said insert (51) being arranged in said clevis (35) by bringing the vertical pin orifice (38) of the fitting into coincidence with the vertical pin orifice (52) of the insert,
- said vertical pin (70) passes through said clevis (35) and said insert (51).

4. Device according to claim 1, **characterized in that**:
- the cuff (30) comprises said clevis (135) extending from the horizontal pin axis (55) of said cuff (50) in the radial direction (AX2), said clevis (135) comprising said vertical pin orifice (52) of the cuff,
- the fitting (30) comprises an insert (151) offset axially from the horizontal pin axis (31) of said fitting (30), said insert (151) comprising said vertical pin orifice (38) of the fitting, said insert being arranged in said clevis of the cuff by bringing the vertical pin orifice of the fitting into coincidence with the vertical pin orifice of the insert,
- said vertical pin (70) passes through said clevis (35) and said insert (51).

5. Device according to any one of claims 2 to 4, **characterized in that** said clevis (35, 135) comprises a top lug (36, 136) and a bottom lug (37, 137), said vertical pin (70) passing through each lug (36, 37, 136, 137) and said insert (51, 151).

6. Device according to any one of claims 1 to 5, **characterized in that** at least one horizontal pin axis (31) comprises at least one bushing (32) and a pin (33) that passes through said bushing (32) and at least one lateral arm (80) in a horizontal pin direction (AX3).

7. Device according to claim 3, **characterized in that** said fitting (30) is T-shaped, the horizontal pin axis (31) of the fitting extending transversely along a first branch of the T, while the clevis (35) extends along a second branch of the T orthogonal to the first branch.

8. Device according to any one of claims 1 to 7, **characterized in that** the horizontal pin axis (31) of the fitting (30) is situated between the vertical pin (70) and the horizontal pin axis (55) of the cuff (50).

9. Device according to any one of claims 1 to 7, **characterized in that** the horizontal pin axis (31) of the fitting (30) and the horizontal pin axis (55) of the cuff (50) are situated axially on opposite sides of the vertical pin (70).

10. Device according to any one of claims 1 to 9, **characterized in that** said device comprises only one lateral arm (80), which arm includes a damper (90).

11. Device according to any one of claims 1 to 10, **characterized in that** said fitting (30) comprises two horizontal pin axes (31) that are offset from each other.

12. Device according to any one of claims 1 to 11, **characterized in that** said cuff (50) comprises two horizontal pin axes that are offset from each other.

13. Blade (5) equipped with an aerofoil (10) extending spanwise in a radial direction (AX2), **characterized in that** said blade (5) comprises a folding device (20) according to any one of claims 1 to 12, said fitting (30) being secured to said aerofoil (10).

14. Blade according to claim 13, **characterized in that** said aerofoil (10) comprises a spar (17), said spar (17) having at least one horizontal tape (19', 19") wound in a horizontal plane and surrounding the vertical pin orifice (38) of the fitting (30) in order to transmit the forces resulting from a flapping motion of the aerofoil, said spar (17) having at least one vertical tape (18', 18") wound in a vertical plane and surrounding a horizontal pin axis (31) of the fitting (30) in order to transmit the forces resulting from a lead-lag motion of the aerofoil.

15. Aircraft (1) equipped with a rotor comprising a hub and a plurality of blades (5), **characterized in that** each blade (5) is a blade according to any one of claims 13 to 14, each cuff (50) being attached to said hub by a retaining and articulating means.
